(19) Europäisches Patentamt
European Patent Office
Office européen des brevets

(11) Publication number: **0 057 019**
**A2**

# (12) EUROPEAN PATENT APPLICATION

(21) Application number: 82100562.6

(22) Date of filing: 27.01.82

(51) Int. Cl.$^3$: B 01 J 20/22
B 01 D 53/14

(30) Priority: 28.01.81 US 229285

(43) Date of publication of application:
04.08.82 Bulletin 82/31

(84) Designated Contracting States:
AT CH DE FR GB IT LI SE

(71) Applicant: UNION CARBIDE CORPORATION
Old Ridgebury Road
Danbury Connecticut 06817(US)

(72) Inventor: Anderson, Charles Chester
309 North Aurora Street
Ithica New York 14850(US)

(72) Inventor: Butwell, Kenneth Francis
2 Lakeview Drive
Newburgh New York 12550(US)

(74) Representative: Schmied-Kowarzik, Volker, Dr.
Patentanwälte Dr. V. Schmied-Kowarzik et al,
Dipl.-Ing. G. Dannenberg Dr. P. Weinhold, Dr. D. Gudel
Dipl.-Ing. S. Schubert, Dr. P. Barz Siegfriedstrasse 8
D-8000 München 40(DE)

## (54) A process for removing acidic gases from gaseous mixtures.

(57) Described herein is a process for removing acidic gases from a normally gaseous mixture which process comprises contacting said gaseous mixture with an aminopolyether.



Croydon Printing Company Ltd

This invention is directed to a process for the removal of acidic gases from a normally gaseous mixture which process comprises contacting said gaseous mixture with an aminopolyether.

Acid gases and other impurities have been removed from natural gas, synthesis gas and refinery gas with liquid absorbents.

The liquid absorbents can usually be divided into three categories: chemical, physical and hybrid solvent processes. The chemical solvent processes utilize aqueous solutions of alkanolamines, such as monoethanol amine and diethanolamine, or alkalis, principally potassium carbonate. The chemical solvents absorb the gaseous impurities, i.e., hydrogen sulfide, and carbon dioxide, by a chemical reaction.

For example, U.S. Patent 2,031,632 describes a chemical solvent process of treating a gaseous mixture stream for the removal therefrom of an acid gas, such as hydrogen sulfide or carbon dioxide, by contacting the mixture with an absorbent which is a mono-, di-, or triethanolamine, diaminopropanol, aminocarboxy or aminohydroxy compounds. Also, U.S. Patent 2,712,978 describes dehydration and removal of acid gases from gas streams by contacting the gas with a hydroxy amino alkyl ether.

In the chemical solvent process, the absorbed gas is tightly held by a chemical bond thus, high gas solubilities correspond to relatively low acid

gas partial pressures and therefore, provide excellent product purity. However, since the gas is absorbed by chemical reaction, a substantial amount of heat is required to desorb the gas. In addition, at high acid gas partial pressures, the solubility is insensitive to partial pressure change in that the solvent becomes chemically saturated at one mole gas per mole of amine and further absorption only occurs due to the limited physical solubility of the gas in the amine and/or the water.

Physical solvents are polar organic liquids. For example, U.S. Patent 2,649,166 describes a physical solvent process for removal of acidic gas impurities from gas streams by an aqueous solution of the dimethyl ether of polyethylene glycol. In the physical solvent process, gas solubility is characterized by non-bonding interactions between the acid gas and solvent. Since the gas is not bonded in a physical solvent, it exerts a high vapor pressure above the solution even at low gas loadings. This leads to poor product purity. However, physical solvents do not become chemically saturated and extremely high loadings are possible at very high partial pressures.

Therefore, chemical solvents are used where low to moderate acid gas partial pressures are involved and are characterized as having low product solubilities, high utility costs, excellent product purity and low capital cost. Physical solvents are used where high

acid gas partial pressures are involved. Also, physical solvents have moderate product purity, higher product solubilities, lower utility costs and higher capital cost.

Hybrid solvents may be a mixture of a chemical solvent and a physical solvent. For example, a commercially available process utilizes a mixture of diisopropanolamine and sulfolane. Also, U.S. Patent 4,100,257 describes a multi-component mixture of compounds. Specifically, U.S. 4,100,257 describes removal of acid gases from a normally gaseous mixture by a process comprising contacting the normally gaseous mixture with an amine-solvent liquid absorbent comprising (i) an amine mixture comprised of at least about 50 mole percent of a sterically hindered amine and at least about 10 mole percent of a tertiary amino alcohol, and (ii) an organic solvent for the amine mixture which is a physical absorbent for the acidic gases.

The hybrid solvents solubilize the acid gases both physically and chemically, thereby providing a product gas stream at minimum operating costs.

It would be desirable to develop a single compound which exhibits the solubility behavior of both a physical and a chemical solvent but because of its exact structure it minimizes operating costs.

## THE INVENTION

It has now been found that acidic gases may be removed from a normally gaseous mixture containing

said acidic gases by treating the mixture with an aminopolyether. The aminopolyether exhibits the solubility behavior of both a physical and a chemical solvent.

It is postulated that the presence of the polyether chain in the aminopolyether destabilizes the product of the acid-base reaction. These solvents have unusually low heats of absorption even at low loadings where chemical solubility is the primary mode of absorption. Mixtures of chemical and physical solvents, as found in the prior art, form more stable reaction products which ultimately increases utility requirements.

The aminopolyethers suitable for use in the present invention are characterized by the following formula:

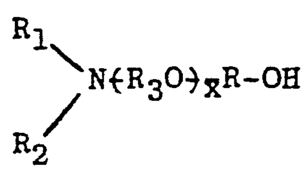

wherein $R_1$ and $R_2$ are independently hydrogen, alkyl of from 1 to 4 carbon atoms, aryl or substituted aryl of from 6 to 10 carbon atoms, $R_1$ and $R_2$ together with the N atom can form a heterocyclic ring such as piperazine, which ring can contain an electronegative heteroatom, such as O, N, or S; $R_3$ is alkyl of from 1 to 4 carbon atoms; x is an integer of from 1 to about 15 with the proviso that when x is 1 to 4 at least one of $R_1$ or $R_2$ is alkyl and R is alkylene of from 1 to 4 carbon atoms. The aminopolyethers are generally present

in the form of mixtures.

The preferred aminopolyethers are those wherein $R_1$ and $R_2$ are independently methyl or ethyl, $R_3$ is ethyl, x has an average value of about 8 and R contains about 2 carbon atoms.

The aminopolyethers are prepared by methods well known in the art, such as by the base catalyzed alkoxylation of the desired amine.

The aminopolyethers are suitable for removing acid gases such as $CO_2$, $H_2S$, $SO_2$, $SO_3$, $CS_2$, HCN, COS and the oxygen and sulfur derivatives of $C_1$ to $C_4$ hydrocarbons in various amounts as they frequently appear in gaseous mixtures, such as in natural gas, synthesis gas and refinery gas. These acidic gases which are generally $CO_2$, $H_2S$ and COS may be present in trace amounts within a gaseous mixture or in major proportions, the major proportion preferably being $CO_2$ or $H_2S$ for the purpose of the present invention.

The aminopolyethers further demonstrate preferential absorption, or solubility, for $H_2S$ gas and thus can be used for selective $H_2S$ removal.

Additionally, the aminopolyethers are suitable as a moisture absorbent where the gas under treatment requires dehydration.

The contacting of the aminopolyether and the acidic gases may take place in any suitable contacting tower. In such processes, the normally gaseous mixture from which the acidic gases are to be removed

may be brought into intimate contact with the aminopolyether using conventional means, such as a tower packed with, for example, ceramic rings or saddles or with bubble cap plates or sieve plates, or a bubble reactor.

In a preferred mode of practicing this invention, the acid gas enters an absorber and flows upward contacting an aqueous solution of aminopolyether. A two-stage solvent introduction is generally used, the leanest solvent, i.e., an aqueous solution containing the aminopolyether with the lowest concentration of dissolved gas, enters at the top of the absorber and an aqueous solution containing a higher concentration of dissolved gas enters at a midway point in the absorber. The purified gas exists at the top of the absorber and the liquid containing the absorbed gas exists at the bottom of the absorber and is sent to a high pressure flask tank at a pressure lower than the absorber pressure. The gases from this first flashing operation are compressed and recycled to the absorber to minimize product loss. The solution is then sent to a second flash tank where the pressure is further reduced. The desorbed gas from this vessel may be used to drive turbines to provide pump horsepower. (After expanding through the turbines, this gas may be used to cool the feed gas.) Most of the solvent from the second flash vessel is sent to a final flash vessel which is at about atmospheric pressure. The solvent from this final flash

vessel is pumped back to the intermediate point in the absorber for bulk acid gas removal. The remainder of the solvent from the second flash vessel is sent to a regenerator tower for final regeneration. This final regeneration may be accomplished by conventional methods, such as by inert gas stripping. The solution from the regenerator tower is sent to the top of the absorber for any further acid gas removal required.

The temperature at which the aminopolyether solution is used depends upon the partial pressure of the acid gas impurities in the feed gas and the product purity required. Generally, the temperature of the aminopolyether solutions during absorption is in the range of from about -15 to about 70°C and preferably, from about 0 to about 50°C.

The pressure of the normally gaseous mixture feed is generally in the range of from about 50 to about 2000 psig and preferably, greater than about 300 psig.

The aminopolyether is generally used as an aqueous solution. The concentration of the aminopolyether in this solution is in the range of from about 30 to 100 weight percent, and preferably, from about 75 to about 95 weight percent.

## EXAMPLES

The following examples serve to illustrate specific embodiments of this invention and it is not intended that the invention shall be limited by the examples.

The apparatus used for the solubility studies consisted of two main components: an equilibrium cell and a gas chromatograph. The equilibrium cell is a one-liter, stainless steel Parr pressure reactor. It is equipped with a variable speed stirrer which agitates the gas and the liquid phase. The temperature in the cell is measured by a copper-constantan type thermocouple immersed in the liquid phase via a fitting in the reactor head. The temperature can be controlled by a heating jacket or by a coil immersed in the liquid. Aqueous glycol solution is circulated to the coil by a Neslab refrigerated recirculator. This mode of temperature control was used primarily for studies below ambient temperature. The temperature is maintained to ±0.5°C. The pressure is measured with a master test gauge which is accurate to ±0.25 psi.

Liquid and gas analysis were made using a gas chromatograph (Hewlett-Packard 5840A) which contains a liquid sampling value which automatically injects a 1 μ liter sample directly from the equilibrium cell.

The procedure used in the examples was as follows:

1. Approximately 700 ml of 1.7 N solution was added to the equilibrium cell and the stirrer activated.

2. The solution was brought to the desired temperature and slowly sparged with nitrogen to remove dissolved oxygen.

3. The cell was pressurized with nitrogen to 20 psig and the solvent was circulated through the liquid sampling valve and back to the cell. The liquid sampling valve is a three-way valve; in one position it circulates solvent around the system and in the second position allows a 1 µl sample to be injected into the gas chromatograph. (Prior to adding solvent to the cell all the lines in the system were purged with nitrogen and then closed to prevent oxygen from entering the cell when circulation of the solvent began.)

4. $CO_2$, 99.5 percent purity, was added to the equilibrium cell, addition was made to the gas phase. As the $CO_2$ was absorbed more was added in order to maintain the desired pressure.

5. When the pressure had remained constant for several hours analysis of the liquid phase began to determine dissolved $CO_2$ concentration. A liquid sample was injected (via the sampling valve) into the gas chromatograph every 30 minutes; equilibrium was assumed when three consecutive liquid analyses were consistent to about $\pm 3$ percent. However, if the numbers were within 3 percent but showed an upward trend in dissolved gas concentration it was assumed that equilibrium was not quite reached and injections were continued until this trend ceased. $H_2O$ and dissolved $CO_2$ concentrations were determined by gas chromatography using the external standardization

method. This was possible since the sampling valve provides an extremely consistent sample size. The solvent concentration was obtained from the difference between 100 percent and the total $H_2O$ and $CO_2$ concentrations. The liquid analysis was taken as the average of the three injections.

6. After completing the liquid analysis a gas sample was collected in a 1500 ml. Houston-Atlas mixing cylinder. A 0.5 cubic centimeter gas sample was transferred into a 1 cubic centimeter syringe and injected into the gas chromatograph. Gas phase analysis was determined by chromatography. The $CO_2$ partial pressure was calculated from the total absolute pressure and the $CO_2$ volume percent. From this procedure equilibrium solubility curves were generated, i.e. partial pressure versus solubility, and from these curves, net solubility and heat of absorption were determined.

The net solubility is the difference in solubility between pressures of 10 and 100 psi of $CO_2$.

The heat of absorption (heat of solution, $\Delta$ Hs) was determined from the Clasius-Clapeyron equation for data at 50 and 75°C.

Control A

The net $CO_2$ solubility of an aqueous solution of diethylethanolamine (20 wt. percent) and the heat of absorption for a 1.7 N solution of the diethylethanolamine were determined by the procedure described, *supra*.

The results are shown in Table I.

Example 1

The net $CO_2$ solubility of an aqueous solution of the two mole ethoxylate of diethylethanolamine (35 wt. percent) and the heat of absorption for a 1.7 N solution of the two mole ethoxylate of diethylethanolamine were determined by the procedure described, supra.

The results are shown in Table I.

Example 2

The net $CO_2$ solubility of an aqueous solution of the three mole ethoxylate of diethylethanolamine (50 wt. percent) and the heat of absorption for a 1.7 N solution of the three mole ethoxylate of diethylethanolamine were determined by the procedure described, supra.

The results are shown in Table I.

Example 3

The net $CO_2$ solubility of an aqueous solution of the six mole ethoxylate of diethylethanolamine (67 wt. percent) and the heat of absorption for a 1.7N solution of the six mole ethoxylate of diethylethanolamine were determined by the procedure described, supra.

The results are shown in Table I.

Example 4

The net $CO_2$ solubility of an aqueous solution of the eight mole ethoxylate of diethylethanolamine (82 wt. percent) and the heat of absorption for a 1.7

N solution of the eight mole ethoxylate of diethylethanolamine were determined by the procedure described, supra.

The results are shown in Table I.

TABLE I

| Example | Net Solubility (m/m @ 50°C) | Heat of Absorption (BTU/lb $CO_2$ @ 0.5 m/m) |
|---|---|---|
| Control A | 0.30 | 575 |
| 1 | 0.375 | 440 |
| 2 | 0.30 | 400 |
| 3 | 0.54 | 360 |
| 4 | 0.58 | 235 |

The data in Table I show that by increasing the length of the polyether chain, the net solubility increases and the heat of absorption decreases. This indicates that physical solubility is enhanced.

Control B

The net $CO_2$ solubility of an aqueous solution of the dimethyl ether of polyethylene glycol (98 wt. percent) was determined between pressures of 10 and 100 psi of $CO_2$ and the heat of absorption for the dimethyl ether solution was determined from the Clasius-Clapeyron equation for literature data.

The results are shown in Table II.

Control C

The net $CO_2$ solubility of an aqueous mixture of diisopropanolamine and the dimethyl ether of polyethylene glycol (about 20 wt.percent of diisopropanolamine, about 70 wt.percent of the dimethyl ether of polyethylene glycol, and the remainder water) and the heat of absorption of the solution were determined by the procedure described in Control B, supra.

The results are shown in Table II.

Control D

The net $CO_2$ solubility of an aqueous mixture of 2-piperidine ethanol and sulfolane (about 20 wt.percent of 2-piperidine ethanol, about 70 wt.percent sulfolane and the remainder water) and the heat of absorption of the solution were determined by the procedure described in Control B. This is a mixture described in U.S. Patent 4,112,051.

The results are shown in Table II.

Control E

The net $CO_2$ solubility of an aqueous mixture of N-methyl monoethanolamine and 2,2-dimethyl-1,3-dioxolane-4-methanol (about 20 wt.percent of the monoethanolamine, about 70 wt.percent of the 2,2-dimethyl-1,3-dioxolane-4-methanol and the remainder water) and the heat of abosrption of the mixture were determined by the procedure described in Control B. This is a mixture described in U.S. Patent 3,502,438.

The results are shown in Table II.

Control F

The net $CO_2$ solubility of an aqueous solution of monoethanolamine (35 wt.percent) and the heat of absorption of the solution were determined by the procedure described in Control B.

The results are shown in Table II.

Control G

The net $CO_2$ solubility of an aqueous mixture of diisopropanolamine and sulfolane (about 20 wt.percent of diisopropanolamine, about 70 wt.percent sulfolane and the remainder water) and the heat of absorption of the mixture were determined by the procedure described in Control B. This is a commercially practiced process, i.e., Shell Sulfinol Process.

The results are shown in Table II.

TABLE II

| Example | Net Solubility (m/m @ 50°C) | Heat of Absorption (BTU/lb $CO_2$ @ 0.5 m/m) |
|---|---|---|
| Control B | 0.50 | 150 |
| Control C | 0.30 | 600 |
| Control D | 0.27 | 625 |
| Control E | 0.43 | 445 |
| Control F | 0.25 | 650 |
| Control G | 0.30 | 530 |
| Example 4 | 0.58 | 235 |

The data in Table II show that the heat of absorption of the instant aminopolyether (Example 4) is considerably less than that of Controls C to G. Thus, much less energy would be required to regenerate the aqueous aminopolyether solution of the present invention. Control C, a mixture of a polyether and an amine, has more than twice the heat of solution and about one half the net solubility of the hybrid solvent of this invention (Example 4). Thus, mixtures are not as effective as the hybrid solvent of this invention. Also, the data show that the heat of absorption of the instant aminopolyether (Example 4) is slightly greater than that of the physical solvent of Control B. However, the aminopolyethers of this invention provide other advantages, such as better product purity, lower product losses, lower solution circulation rates, and lower capital costs which greatly offsets the slightly higher heat of absorption.

The residues defined as alkyl of from 1 to 4 carbon atoms are preferably methyl, ethyl, propyl, i-propyl, butyl, i-butyl or sec.-butyl. The aryl or substituted aryl residues with 6 to 10 carbon atoms are preferably phenyl, tolyl, xylyl, ethylphenyl, naphthyl, etc.

WHAT IS CLAIMED IS:

1. A process for removing acidic gases from a normally gaseous mixture which process comprises contacting said gaseous mixture with an aminopolyether, characterized by the following formula:

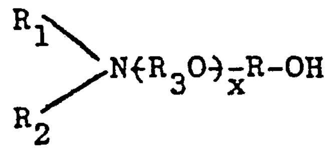

wherein $R_1$ and $R_2$ are independently hydrogen, alkyl of from 1 to 4 carbon atoms, aryl or substituted aryl of from 6 to 10 carbon atoms, $R_1$ and $R_2$ together with the N atom can form a heterocyclic ring, which ring can contain an electronegative heteroatom, $R_3$ is alkyl of from 1 to 4 carbon atoms, x is an integer of from 1 to about 15 with the proviso that when x is 1 to 4 at least one of $R_1$ or $R_2$ is alkyl, and R is alkylene of from 1 to 4 carbon atoms.

2. A process is defined in claim 1 wherein $R_1$ and $R_2$ are independently methyl or ethyl, $R_3$ is ethyl, x has an average value of about 8 and R contains 2 carbon atoms.

3. A process as defined in claim 1 or 2 wherein the aminopolyether is the two-mole ethoxylate of diethylethanolamine, the three-mole ethoxylate of diethylethanolamine, the six-mole ethoxylate of diethylethanolamine or the eight-mole ethoxylate of diethylethanolamine.

4. A process as defined in claim 1 wherein the acidic gas comprises carbon dioxide and/or hydrogen sulfide.

5. A process as defined in any one of the preceding claims wherein the aminopolyether is used as an aqueous solution.

6. A process as defined in any one of the preceding claims wherein the gaseous mixture contains moisture, said moisture being absorbed by the aminopolyether.

7. A process for the removal of hydrogen sulfide containing acidic gases from a normally gaseous mixture which comprises contacting said gases with an aminopolyether, characterized by the following formula:

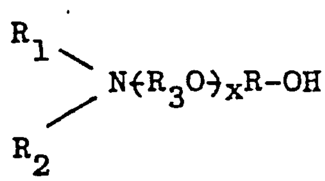

wherein $R_1$ and $R_2$ are independently hydrogen, alkyl of from 1 to 4 carbon atoms, aryl or substituted aryl of from 6 to 10 carbon atoms, $R_1$ and $R_2$ together with the N atom can form a heterocyclic ring, which ring can contain an electronegative heteroatom, $R_3$ is alkyl of from 1 to 4 carbon atoms, x is an integer of from 1 to about 15 with the proviso that when x is 1 to 4 at least one of $R_1$ or $R_2$ is alkyl and R is alkylene of from 1 to 4 carbon atoms.

8. A process as defined in claim 7 wherein $R_1$ and $R_2$ are independently methyl or ethyl, $R_3$ is ethyl, x has an average value of about 8 and R contains 2 carbon atoms.